(19) **Europäisches Patentamt**
**European Patent Office**
**Office européen des brevets**

(11) **EP 3 581 484 B1**

(12) **FASCICULE DE BREVET EUROPEEN**

(45) Date de publication et mention
de la délivrance du brevet:
**02.12.2020 Bulletin 2020/49**

(51) Int Cl.:
**B64C 3/14** *(2006.01)*

(21) Numéro de dépôt: **19174026.5**

(22) Date de dépôt: **13.05.2019**

(54) **PROFILS AERODYNAMIQUES A EFFICACITE STABILISATRICE AMELIOREE POUR EMPENNAGES ET DERIVES**

AERODYNAMISCHE PROFILE MIT VERBESSERTER STABILISIERENDER WIRKUNG FÜR LEITWERKE UND SEITENFLOSSEN

AERODYNAMIC PROFILES WITH IMPROVED STABILISING EFFICIENCY FOR TAILS AND TAILFINS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2018 FR 1800615**

(43) Date de publication de la demande:
**18.12.2019 Bulletin 2019/51**

(73) Titulaire: **Airbus Helicopters**
**13725 Marignane Cedex (FR)**

(72) Inventeur: **KELAIDIS, Manousos**
**13007 Marseille (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A2- 1 112 928     DE-B- 1 247 140**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention est du domaine des surfaces stabilisatrices des aéronefs et plus particulièrement des empennages horizontaux et verticaux des giravions.

La présente invention concerne des profils aérodynamiques pour surfaces stabilisatrices destinées à des giravions et dont l'efficacité stabilisatrice est améliorée. La présente invention concerne également des surfaces stabilisatrices destinées à des giravions et formées par ces profils aérodynamiques, les dimensions de ces surfaces stabilisatrices pouvant être réduites sans perte d'efficacité dans leurs fonctions de stabilisation.

Un giravion est un aéronef comportant au moins une voilure tournante permettant au giravion d'évoluer aussi bien avec des vitesses d'avancement élevées lors de vols de croisière qu'avec de très faibles vitesses d'avancement et réaliser notamment des vols stationnaires. Un giravion comporte classiquement un fuselage, une poutre de queue, au moins un rotor principal, une installation motrice et un dispositif anticouple.

Un giravion comporte également fréquemment une ou plusieurs surfaces stabilisatrices positionnées généralement à l'arrière du fuselage, sur la poutre de queue. De telles surfaces stabilisatrices ont pour fonction d'assurer une stabilisation en vol d'avancement des mouvements du giravion autour des axes de roulis et/ou de tangage et/ou de lacet.

Une surface stabilisatrice permettant une stabilisation des mouvements du giravion autour de son axe de tangage est généralement agencée horizontalement sur le giravion et désignée « gouverne de profondeur » ou « empennage horizontal ». Une surface stabilisatrice permettant une stabilisation des mouvements du giravion autour de son axe de lacet est généralement agencée verticalement sur le giravion et désignée « gouverne de direction » ou « empennage vertical » ou encore « dérive ». Un empennage vertical peut également aider un dispositif anticouple du giravion aux grandes vitesses d'avancement en générant une force aérodynamique latérale.

En outre, une surface stabilisatrice peut également être agencée sur le giravion avec une angulation comprise entre 0 degré (0°) et plus ou moins 90 degrés (90°) avec une direction horizontale du giravion. Dans ce cas, la surface stabilisatrice peut permettre simultanément une stabilisation des mouvements du giravion autour de ses axes de tangage et de lacet.

Une surface stabilisatrice s'étend selon une première direction en envergure d'une première extrémité à une seconde extrémité et selon une seconde direction d'un bord d'attaque vers un bord de fuite. Une surface stabilisatrice comporte des sections transversales successives, chaque section transversale étant définie par un profil aérodynamique. On note que, le profil aérodynamique peut être le même pour toutes les sections transversales de la surface stabilisatrice. Toutefois, une surface stabilisatrice peut être définie par des sections transversales dont les profils aérodynamiques peuvent être différents. Des profils aérodynamiques utilisés traditionnellement pour les surfaces stabilisatrices de giravions sont généralement des profils aérodynamiques qui ont été définis pour former des ailes d'aéronef à voilure fixe, par exemple des profils aérodynamiques connus selon les désignations « NACA » ou bien « GAW ».

Une surface stabilisatrice assure la fonction de stabilisation en créant, lors des vols d'avancement sous l'effet d'un écoulement d'air généré par l'avancement du giravion et balayant la surface stabilisatrice, une force aérodynamique provoquant l'apparition d'un moment de stabilisation autour du centre de gravité du giravion. Cette force aérodynamique varie avec les changements d'assiette du giravion et/ou les dérapages du giravion autour de l'axe de lacet induisant un changement de l'angle d'incidence des surfaces stabilisatrices dans cet écoulement d'air.

En conséquence, ce moment de stabilisation généré par une surface stabilisatrice du giravion varie également suite aux perturbations des angles d'incidence et de dérapage du giravion, s'opposant ainsi à la déviation angulaire du giravion. Ce moment de stabilisation dépend essentiellement de trois paramètres de la surface stabilisatrice, à savoir sa surface, la distance entre la surface stabilisatrice et le centre de gravité du giravion ainsi que l'efficacité stabilisatrice des profils aérodynamiques de la surface stabilisatrice. De fait, il est évident que pour une surface et une distance entre la surface stabilisatrice et le centre de gravité du giravion données, une augmentation de l'efficacité stabilisatrice de cette surface stabilisatrice provoque une augmentation, sensiblement proportionnellement, de la stabilité générée par la surface stabilisatrice.

Il est connu que le terme « *Cza* » caractérisant le gradient de portance dit encore « pente de portance » ou « lift slope » en langue anglaise d'une surface stabilisatrice correspond à la variation de la force aérodynamique générée par la surface en fonction de la variation correspondante de l'angle d'incidence locale. Le gradient de portance *Cza* est égal à la dérivée du coefficient de portance Cz de la surface stabilisatrice en fonction de l'angle d'incidence $\alpha$ : $Cza=dCz/d\alpha$.

En fait, le gradient de portance *Cza* est relatif à une surface d'allongement fini A. C'est ainsi que la pente de portance en allongement infini $(Cza)_\infty$ est, à titre d'exemple, pour une surface à répartition elliptique de circulation telle que :

$$(Cza)_\infty = Cza.\frac{1}{1-\frac{57.3}{\pi.\Lambda}.Cza}$$

L'efficacité stabilisatrice d'une surface stabilisatrice utilisée généralement sur un giravion est formée par des profils aérodynamiques conventionnels de type « NACA » ou bien « GAW » est caractérisée par exemple par un gradient de portance $(Cza)_\infty$ de l'ordre de 0.10 et $Cza$ de l'ordre de 0.07. Il est encore connu que ce gradient de portance $Cza$ peut être amélioré par la troncature du bord de fuite et/ou l'utilisation de cornières de type « Gurney ». Toutefois, cette amélioration reste faible, de l'ordre de 10%, cette amélioration augmentant avec l'épaisseur relative des profils aérodynamiques utilisés.

En outre, afin d'assurer des bonnes qualités de vol et en particulier un giravion stable à grande vitesse d'avancement, il est nécessaire d'utiliser une ou plusieurs surfaces stabilisatrices avec des dimensions conséquentes. La présence de ces surfaces stabilisatrices de dimensions conséquentes n'est pas trop pénalisante en termes de traînée aérodynamique, la traînée aérodynamique générée par ces surfaces stabilisatrices représentant généralement moins de 5% de la traînée aérodynamique totale du giravion. Par contre, la masse de ces surfaces stabilisatrices peut être significative, d'autant que ces surfaces stabilisatrices sont positionnées habituellement à l'arrière du giravion.

Cependant, le problème principal généré par la présence de ces surfaces stabilisatrices de dimensions conséquentes est un phénomène spécifique au giravion et désigné « bosse d'assiette ». Lors de vols d'avancement à basse vitesse ainsi qu'en vol stationnaire, l'écoulement d'air traversant le rotor principal du giravion est orienté vers le bas et vient impacter les surfaces stabilisatrices, principalement les surfaces stabilisatrices horizontales, générant l'apparition sur ces surfaces stabilisatrices un effort sensiblement vertical significatif orienté vers le bas et désigné « déportance ».

Cette déportance provoque la création d'un moment à cabrer sur le fuselage du giravion autour de l'axe de tangage. Par suite, l'assiette du giravion autour de l'axe de tangage peut être modifiée si le pilote ne compense pas ce moment à cabrer en manœuvrant les commandes de vol du giravion. Dès lors, au cours de ces vols d'avancement à basse vitesse, le pilote du giravion doit compenser en permanence ce moment à cabrer, cette compensation constituant la « bosse d'assiette », afin de diminuer le cabrage du giravion, ce qui complique notablement le pilotage du giravion, notamment dans des phases de vol critiques, telles que les phases d'approche et d'atterrissage. Un effet secondaire de cette déportance est l'apparition d'un moment sur le mât du rotor principal du giravion qui peut prendre des valeurs très importantes, et peut également amener à un endommagement en fatigue de ce mât du rotor principal.

On comprend alors que pour réduire la bosse d'assiette et les problèmes associés, il faut réduire les dimensions des surfaces stabilisatrices, ce qui est contradictoire aux exigences de stabilité en vol à grande vitesse d'avancement, visant à maximiser les dimensions de ces surfaces stabilisatrices. Cette double contrainte, à savoir de grandes dimensions de sorte à maximiser la stabilisation du giravion et de petites dimensions afin de minimiser la bosse d'assiette, peut se traduire par un point de blocage lors du développement et de la mise au point d'un giravion.

Cependant, des solutions visant à limiter voire à supprimer la bosse d'assiette ont été étudiées. Par exemple, une architecture de surfaces stabilisatrices est munie d'élément fixes et d'autres éléments mobiles. La position des éléments mobiles par rapport aux éléments fixes peut alors être contrôlée via des commandes de vol pour limiter le phénomène de bosse d'assiette. Bien qu'intéressante, cette architecture impose des commandes de vol induisant une augmentation de la masse du giravion, ainsi qu'une complexité accrue du giravion.

Une autre solution consiste à agencer une surface stabilisatrice en dehors du sillage du rotor principal du giravion. Cependant, cette deuxième solution induit de fait une perte d'efficacité notable de la surface stabilisatrice et génère des contraintes d'implantation de cette surface stabilisatrice.

L'art antérieur de l'invention comporte les documents DE 1247140 et EP 3401211 décrivant des profils aérodynamiques à bord de fuite tronqué comportant un demi-profil d'extrados convexe et un demi-profil d'intrados muni d'une zone centrale convexe et d'au moins une zone avant et/ou arrière concave.

En outre, l'arrière plan technologique de l'invention inclut le document EP 1112928 qui décrit des profils aérodynamiques à bords de fuite épais et/ou divergents, éventuellement équipés de cornières de type « Gurney », et destinés à la réalisation d'ailes d'aéronef à voilure fixe. Ces profils aérodynamiques comportent des ouvertures, notamment des rainures, sur leurs bords de fuite afin de réduire la trainée aérodynamique et le bruit générés par ces profils aérodynamiques.

Dans ces conditions, la présente invention propose des profils aérodynamiques spécifiques selon la revendication 1 pour des surfaces stabilisatrices destinées à des giravions, quelles soient horizontales ou verticales, et à efficacité stabilisatrice améliorée. La présente invention a aussi pour objet des surfaces stabilisatrices destinées à des giravions et formées par ces profils aérodynamiques selon la revendication 11 permettant de s'affranchir des limitations mentionnées ci-dessus, de réduire ainsi leurs dimensions sans perte d'efficacité dans leurs fonctions de stabilisation et, par suite, de réduire le phénomène de bosse d'assiette susceptible d'apparaître en vol d'avancement à basse vitesse et en vol stationnaire sur les giravions.

Selon l'invention, un profil aérodynamique destiné à une surface stabilisatrice d'un giravion, s'étend d'un bord d'attaque vers un bord de fuite et est défini par deux demi-profils, incluant un demi-profil d'extrados et un demi-profil d'intrados, le profil aérodynamique étant défini par une corde c entre le bord d'attaque et le bord de fuite, par une épaisseur maximale t entre le demi-profil d'extrados et le demi-profil d'intrados mesurée perpendiculairement à la ligne de cambrure du profil aérodynamique, et par une épaisseur relative $t/c$ égale au rapport de l'épaisseur maximale t par la corde c.

Une surface stabilisatrice constituée par les profils aérodynamiques selon l'invention peut être une surface stabilisatrice en lacet, à savoir sensiblement verticale, une surface stabilisatrice en tangage, à savoir sensiblement horizontale, voire inclinée vis-à-vis d'une direction horizontale du giravion.

Le profil aérodynamique selon l'invention est remarquable en ce que :

- l'épaisseur relative du profil aérodynamique est supérieure ou égale à 0.15,
- le bord de fuite est tronqué de sorte qu'une hauteur h du bord de fuite est supérieure ou égale à 0.05.c et
- au moins le demi-profil d'extrados comporte une première courbe convexe et une seconde courbe concave.

Le demi-profil d'extrados comportant la première courbe convexe et la seconde courbe concave possède ainsi deux points d'extrema locaux ayant une dérivée nulle, à savoir un maximum local et un minimum local, ainsi qu'un point d'inflexion situé entre ces deux extrema. La première courbe convexe est située entre le bord d'attaque du profil aérodynamique et le point d'inflexion, soit en amont du point d'inflexion selon le sens habituel de l'écoulement d'air sur le profil aérodynamique, à savoir du bord d'attaque vers le bord de fuite. La seconde courbe concave est située entre le point d'inflexion et le bord de fuite du profil aérodynamique, soit en aval de ce point d'inflexion et en aval de la première courbe convexe.

La présence de la seconde courbe concave sur le demi-profil d'extrados du profil aérodynamique selon l'invention permet, sous certains angles d'incidence, désignés « angles d'incidence de décrochage local », de provoquer un décollement de l'écoulement d'air balayant le profil aérodynamique sur cette seconde courbe concave de ce demi-profil du profil aérodynamique entraînant un décrochage aérodynamique local de l'écoulement d'air. Ce décrochage local sur la seconde courbe concave peut être plus ou moins important selon la valeur de l'angle d'incidence de décrochage local.

Par ailleurs, la première courbe convexe étant située en amont de la seconde courbe concave, l'écoulement d'air n'est aucunement perturbé par ce décrochage aérodynamique local de l'écoulement d'air. De fait, sous ces angles d'incidence de décrochage local, l'écoulement d'air balayant le profil aérodynamique peut rester tangent à la première courbe convexe.

De la sorte, la présence de ce décrochage aérodynamique local de l'écoulement d'air sur la seconde courbe concave pour les angles d'incidence de décrochage local ne provoque pas une chute brutale de la portance du profil aérodynamique, contrairement au phénomène de décrochage aérodynamique habituellement rencontré sur des profils aérodynamiques pour de forts angles d'incidence. En effet, grâce à la présence de ce décrochage aérodynamique local de l'écoulement d'air sur la seconde courbe concave, l'écoulement d'air sur le profil aérodynamique selon l'invention génère avantageusement l'apparition d'une force aérodynamique de portance sensiblement perpendiculaire à l'écoulement d'air ainsi qu'une augmentation du gradient de portance *Cza* de ce profil aérodynamique selon l'invention. La présence de ce décrochage aérodynamique local sur la seconde courbe concave peut également provoquer une augmentation de la traînée aérodynamique du profil aérodynamique.

Ce décrochage aérodynamique local est avantageusement progressif lors de la variation de l'angle d'incidence du profil aérodynamique et peut de fait être avantageusement contrôlé avec l'évolution de cet angle d'incidence.

En effet, lors d'une variation de l'angle d'incidence dans la plage des angles d'incidence de décrochage local, ce décrochage local sur la seconde courbe concave peut être plus ou moins important, impactant de fait la force aérodynamique de portance du profil aérodynamique. De plus, pour un angle d'incidence hors de la plage des angles d'incidence de décrochage local, ce décrochage local sur la seconde courbe concave disparaît, ce qui a pour effet d'augmenter significativement la force aérodynamique de portance du profil aérodynamique.

Ces angles d'incidence de décrochage local appartiennent par exemple à une plage allant de -5° à +5° pour un profil aérodynamique selon l'invention dont le demi-profil d'extrados comporte une première courbe convexe et une seconde courbe concave alors qu'un décrochage aérodynamique habituellement rencontré sur des profils aérodynamiques apparaît pour de forts angles d'incidence supérieures à 15°.

En conclusion, la présence de la première courbe convexe et la seconde courbe concave selon l'invention permet avantageusement d'avoir une amplitude de variation de la force aérodynamique de portance du profil aérodynamique plus importante, grâce à l'utilisation du décrochage aérodynamique local de l'écoulement d'air sur la seconde courbe concave.

Le profil aérodynamique selon l'invention permet de la sorte une amélioration significative de son efficacité stabilisatrice *Cza*, caractérisant la variation de la portance du profil aérodynamique, grâce à la présence de la première courbe convexe et la seconde courbe concave et au décrochage aérodynamique progressif et contrôlé de la seconde courbe concave.

En outre, la présence de la première courbe convexe et la seconde courbe concave selon l'invention implique une épaisseur relative *t/c* minimale égale à 0.15 ainsi qu'un bord de fuite tronqué afin notamment de limiter la valeur de la corde c du profil aérodynamique. Le bord de fuite du profil aérodynamique selon l'invention comporte alors une face arrière plane, désignée « culot », de préférence sensiblement verticale et d'une hauteur h supérieure ou égale à 0.05.c.

Le profil aérodynamique selon l'invention est ainsi constitué par une combinaison de ces trois caractéristiques d'un profil aérodynamique : une épaisseur relative significative, une troncature du bord de fuite et la présence d'une première courbe convexe et la seconde courbe concave prononcée sur le demi-profil d'extrados du profil aérodynamique.

Par ailleurs, l'épaisseur relative $t/c$ du profil aérodynamique selon l'invention peut être comprise entre 0.15 et 0.35. La hauteur h du culot du bord de fuite peut quant à elle être comprise entre 0.05.c et 0.20.c.

Dans un mode préféré de réalisation du profil aérodynamique selon l'invention, l'épaisseur relative $t/c$ du profil aérodynamique est comprise entre 0.20 et 0.25 alors que la hauteur h du culot du bord de fuite est comprise entre 0.05.c et 0.10.$c$.

Un seul des deux demi-profils du profil aérodynamique peut comporter une première courbe convexe et une seconde courbe concave.

Par exemple, selon une première variante du profil aérodynamique selon l'invention, le demi-profil d'extrados comporte la première courbe convexe et la seconde courbe concave, la force aérodynamique de portance du profil aérodynamique est orientée dans une direction opposée au demi-profil d'extrados et constitue en fait une déportance. Dans ce cas, le premier point d'extremum local A de la première courbe convexe est un maximum local et le second point d'extremum local B de la seconde courbe concave est un minimum local.

Selon une deuxième variante du profil aérodynamique qui n'est pas selon l'invention, le demi-profil d'intrados peut également comporter la première courbe convexe et la seconde courbe concave, la force aérodynamique de portance du profil aérodynamique est orientée dans une direction opposée au demi-profil d'intrados et constitue bien une portance. Dans ce cas, le premier point d'extremum local A de la première courbe convexe est un minimum local et le second point d'extremum local B de la seconde courbe concave est un maximum local.

Cependant, selon une troisième variante du profil aérodynamique selon l'invention, une première courbe convexe et une seconde courbe concave peuvent aussi être agencées simultanément sur chacun des deux demi-profils du profil aérodynamique.

En outre, un profil aérodynamique peut être défini dans un repère (U,V) attaché à ce profil aérodynamique et défini par les directions de la corde c et de l'épaisseur maximale t du profil aérodynamique, une unité de l'axe des abscisses U et de l'axe des ordonnées V étant égale à la corde c. Dans ce repère (U,V), le bord d'attaque a comme coordonnées (0,0) et le bord de fuite a une abscisse égale à 1. Le premier extremum local A de la première courbe convexe a une abscisse comprise entre 0.2 et 0.7 et le second extremum local B de la seconde courbe concave a une abscisse comprise entre 0.4 et 0.9, l'abscisse du premier extremum local A étant strictement inférieure à l'abscisse du second extremum local B.

Les positions de ces extrema A, B de la première courbe convexe et de la seconde courbe concave permet avantageusement de moduler l'influence du décrochage progressif de l'écoulement d'air sur la force aérodynamique générée par le profil aérodynamique et, de la sorte, sur le gradient de portance $Cza$ caractérisant l'efficacité stabilisatrice de ce profil aérodynamique. La profondeur de cette seconde courbe concave ainsi que les pentes en amont et en aval du second extremum B permettent également de modifier l'efficacité stabilisatrice de ce profil aérodynamique.

Typiquement, l'ordonnée du second extremum local B de la seconde courbe concave dans le repère (U,V) peut être comprise entre -0.1 et 0.1 alors qu'une première pente du demi-profil comportant la première courbe convexe et la seconde courbe concave peut être comprise entre -10 degrés (-10°) et -40 degrés (-40°) au niveau du point d'inflexion entre la première courbe convexe et la seconde courbe concave et une seconde pente de ce demi-profil, au niveau d'une jonction entre la seconde courbe concave et le bord de fuite, peut être comprise entre +10 degrés (+10°) et +50 degrés (+50°).

Le profil aérodynamique permet de la sorte d'obtenir une augmentation de son efficacité stabilisatrice de l'ordre de 30%, par rapport aux profils aérodynamiques conventionnels utilisés pour des surfaces stabilisatrices.

La présente invention a également pour objet une surface stabilisatrice destinée à un giravion, la surface stabilisatrice s'étendant selon une première direction en envergure d'une première extrémité à une seconde extrémité et selon une seconde direction d'un bord d'attaque vers un bord de fuite. La surface stabilisatrice comporte des sections transversales successives définies respectivement par un profil aérodynamique, un ou plusieurs de ces profils aérodynamiques étant tels que précédemment décrits.

Dès lors, une telle surface stabilisatrice destinée à un giravion et dont une ou plusieurs sections transversales sont définies par un profil aérodynamique telle que précédemment décrit a, pour des dimensions identiques, des effets plus importants sur la stabilisation du giravion qu'une surface stabilisatrice formée par des profils aérodynamiques conventionnels.

De plus, une telle surface stabilisatrice destinée à un giravion et dont une ou plusieurs sections transversales sont définies par un profil aérodynamique telle que précédemment décrit peut voir ses dimensions réduites afin de fournir les mêmes effets sur la stabilisation du giravion qu'une surface stabilisatrice formée par des profils aérodynamiques conventionnels. Dans ce cas, la bosse d'assiette du giravion lors des vols stationnaires et à basses vitesse d'avancement est avantageusement également réduite significativement, ce qui facilite le pilotage du giravion lors de tels vols stationnaires et à basses vitesse d'avancement ainsi que dans les phases de vols critiques telles que le décollage et l'atterrissage.

La réduction des dimensions d'une surface stabilisatrice comportant des sections transversales définies par un profil aérodynamique telle que précédemment décrit peut être de l'ordre de 30%, de même que la réduction de sa masse. En conséquence, le gain sur la bosse d'assiette généré par cette surface stabilisatrice est également de l'ordre de 30%.

Une surface stabilisatrice peut être définie par des sections transversales dont les profils aérodynamiques sont exclusivement tel que précédemment décrit.

Cette surface stabilisatrice peut ainsi constituer une surface stabilisatrice en tangage du giravion. Cette surface stabilisatrice peut également constituer une surface stabilisatrice en lacet du giravion.

La présente invention a aussi pour objet un giravion comportant un fuselage, une poutre de queue, au moins un rotor principal et une installation motrice ainsi qu'au moins une surface stabilisatrice telle que précédemment décrite.

L'invention et ses avantages apparaîtront avec plus de détails dans le cadre de la description qui suit avec des exemples de réalisation donnés à titre illustratif en référence aux figures annexées qui représentent :

- la figure 1, un giravion,
- la figure 2, une surface stabilisatrice,
- la figure 3, un profil aérodynamique conventionnel, et
- les figures 4 à 6 et 10, des profils aérodynamiques selon l'invention et
- les figures 7 à 9, des profils aérodynamiques selon une autre variante qui ne fait pas partie de la présente invention.

Les éléments présents dans plusieurs figures distinctes sont affectés d'une seule et même référence.

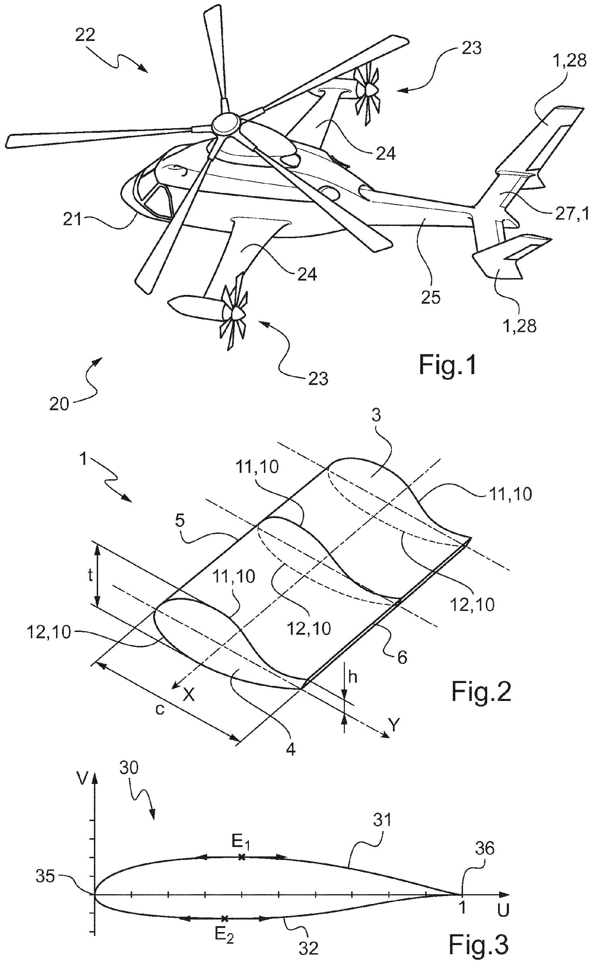

La figure 1 représente un giravion 20 comportant un fuselage 21, un rotor principal 22, deux demi-ailes 24 agencées de part et d'autre du fuselage 21, une poutre de queue 25 et deux hélices d'avancement 23. Les deux hélices d'avancement 23 sont positionnées de part et d'autre du fuselage 21, respectivement à l'extrémité d'une demi-aile 24 et constituent également le dispositif anticouple du giravion 20. Le giravion 20 comporte aussi trois surfaces stabilisatrices 1,27,28 positionnées à l'arrière de la poutre de queue 25 et formant respectivement un empennage 1,27 sensiblement horizontal et deux dérives 1,28 sensiblement verticales.

Une surface stabilisatrice 1 pouvant constituer un empennage 27 ou bien une dérive 28 est représentée sur la figure 2, La surface stabilisatrice 1 s'étend selon une première direction X en envergure d'une première extrémité 3 à une seconde extrémité 4 et selon une seconde direction Y d'un bord d'attaque 5 vers un bord de fuite 6. La surface stabilisatrice 1 comporte des sections transversales successives dans un plan transversal parallèle à la seconde direction Y, chaque section transversale étant définie par un profil aérodynamique 10 comportant notamment deux demi-profils 11,12, à savoir un demi-profil d'extrados 11 et un demi-profil d'intrados 12. Les profils aérodynamiques 10 constituant la surface stabilisatrice 1 peuvent être identiques pour toutes les sections transversales ou bien différents selon ces sections transversales.

Chaque profil aérodynamique 10 est notamment caractérisé par une corde c entre le bord d'attaque 5 et le bord de fuite 6, par une épaisseur maximale t entre le demi-profil d'extrados 11 et le demi-profil d'intrados 12 mesurée perpendiculairement à la ligne de cambrure du profil aérodynamique 10, et par une épaisseur relative $t/c$ égale au rapport de l'épaisseur maximale $t$ par la corde c.

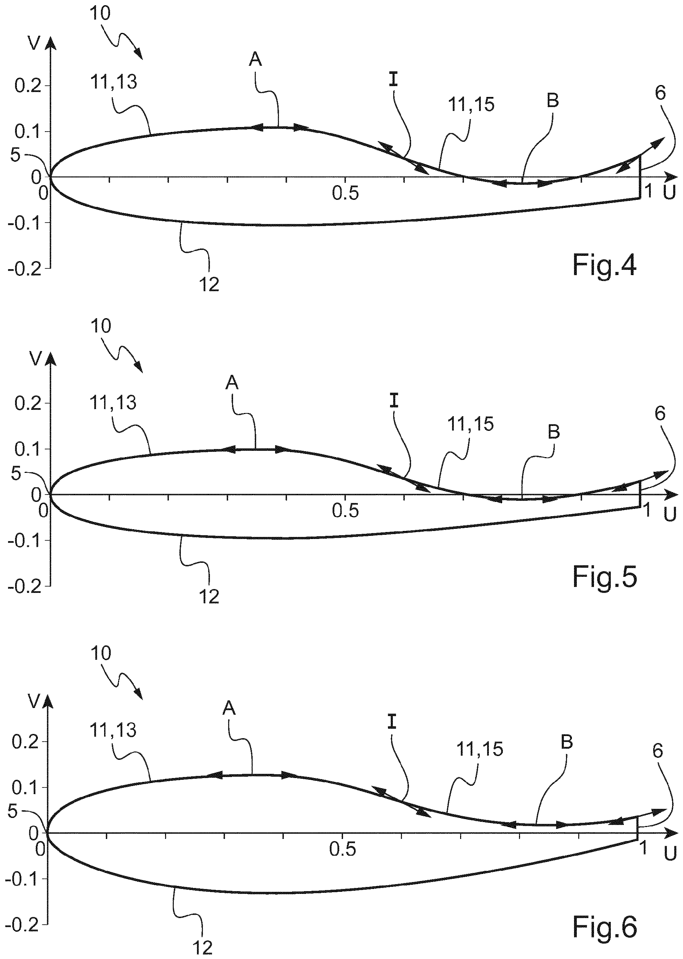

La figure 3 représente un profil aérodynamique conventionnel 30 utilisé habituellement pour les surfaces stabilisatrices d'un giravion et les figures 4 à 6 et 10, représentent des profils aérodynamiques 10 selon l'invention. Ces profils aérodynamiques conventionnels 30 ou bien selon l'invention 10 sont représentés dans un repère (U,V) attaché à chacun de ces profils aérodynamiques 10,30 et défini par les directions de leurs cordes c et de leurs épaisseurs maximales t. Une unité de l'axe des abscisses U et de l'axe des ordonnées V est égale à la corde c de chaque profil aérodynamique 10,30. Dans ce repère (U,V), les bords d'attaque 5,35 de chacun de ces profils aérodynamiques 10,30 ont comme coordonnées (0,0) et leurs bords de fuite 6,36 ont une abscisse égale à 1.

Le profil aérodynamique conventionnel 30 représenté sur la figure 3 est un profil aérodynamique de type « GAW » dont l'épaisseur relative est principalement comprise entre 0.12 et 0.17. Un tel profil aérodynamique conventionnel 30 a été développé pour l'aviation générale, principalement pour les ailes d'avions volants à basses vitesses, typiquement entre Mach 0.3 à Mach 0.6, le nombre de Mach étant le rapport de la vitesse locale d'un fluide par la vitesse du son dans ce fluide. Les objectifs de ce profil aérodynamique conventionnel 30 est d'augmenter la portance aérodynamique qu'il génère et de diminuer sa trainée aérodynamique.

Ce profil aérodynamique conventionnel 30 comporte un bord d'attaque 35 arrondi et un bord de fuite 36 effilé. Le profil d'extrados 31 de ce profil aérodynamique conventionnel 30 comporte un seul extremum local, à savoir un maximum local E1, et son profil d'intrados 32 comporte un seul extremum local, à savoir un minimum local E2. Ce profil aérodynamique conventionnel 30 a un gradient de portance $(Cz\alpha)_\infty$ de l'ordre de 0.1.

Trois variantes du profil aérodynamique 10 sont représentées sur les figures 4 à 10. De façon commune à ces trois variantes, le profil aérodynamique 10 comporte une épaisseur relative $t/c$ supérieure ou égale à 0.15, un bord de fuite 6 tronqué de sorte que la hauteur h de ce bord de fuite 6 est supérieure ou égale à 0.05.c et au moins un des deux demi-profils 11,12 est formé par une première courbe convexe 13,14 et une seconde courbe concave 15,16. Le bord de fuite 6 tronqué implique la présence d'un bord de fuite 6 formé par une face arrière plane ou culot, de préférence sensiblement verticale.

Le demi-profil 11,12 comportant la première courbe convexe 13,14 et la seconde courbe concave 15,16 possède ainsi deux points d'extrema locaux A,B ayant une dérivée nulle ainsi qu'un point d'inflexion I situé entre ces deux extrema A,B. La première courbe convexe 13,14 est située entre le bord d'attaque 5 et le point d'inflexion I, et la seconde courbe concave 15,16 est située entre le point d'inflexion I et le bord de fuite 6.

Pour la première variante du profil aérodynamique 10 selon l'invention représentée sur les figures 4 à 6, le demi-profil d'extrados 11 comporte la première courbe convexe 13 et la seconde courbe concave 15 alors que le demi-profil d'intrados 12 comporte une courbe uniquement convexe. En conséquence, le premier point d'extremum local A de la première courbe convexe 13 est un maximum local et le second point d'extremum local B de la seconde courbe concave 15 est un minimum local.

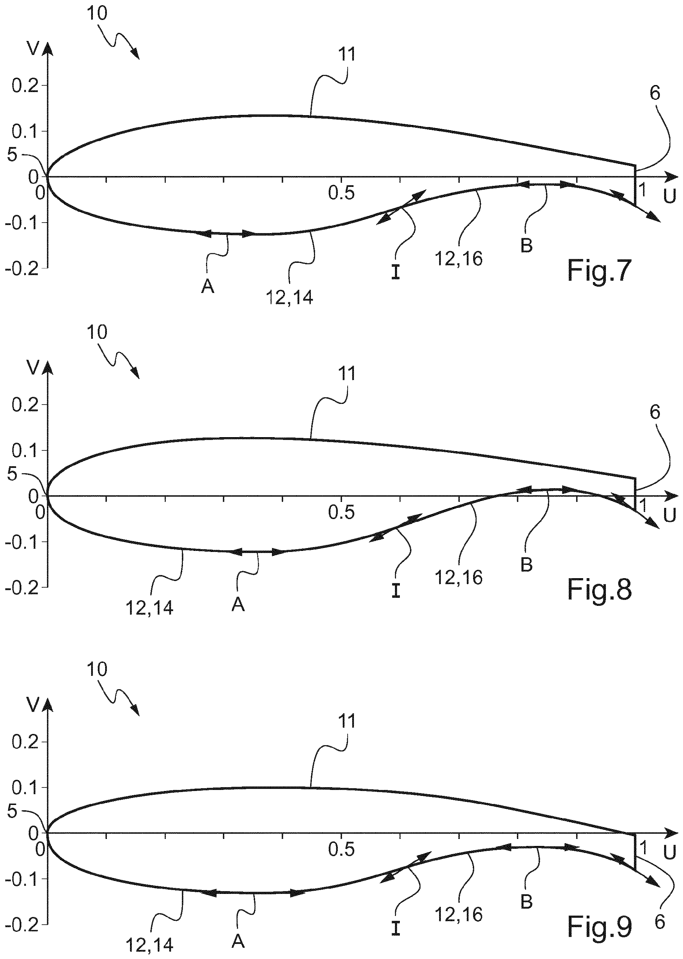

Pour la deuxième variante du profil aérodynamique 10 qui n'est pas selon l'invention représentée sur les figures 7 à 9, le demi-profil d'intrados 12 comporte la première courbe convexe 14 et la seconde courbe concave15 alors que le demi-profil d'extrados 11 comporte une courbe uniquement convexe. Dans ce cas, le premier point d'extremum local A de la première courbe convexe 14 est un minimum local et le second point d'extremum local B de la seconde courbe concave 16 est un maximum local.

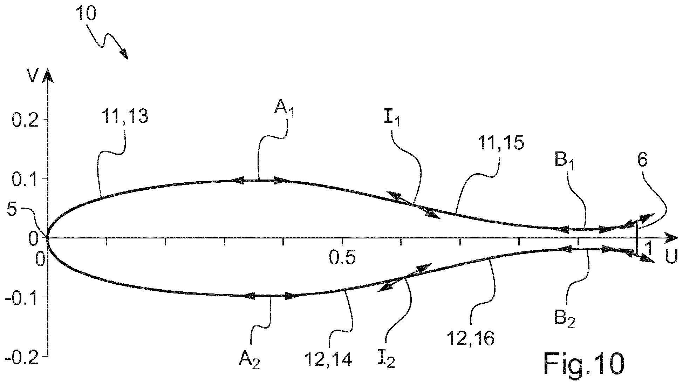

Enfin, pour la troisième variante du profil aérodynamique 10 selon l'invention représentée sur la figure 10, les deux demi-profils d'extrados 11 et d'intrados 12 comportent simultanément et indépendamment une première courbe convexe 13,14 et une seconde courbe concave 15,16. Le demi-profil d'extrados 11 comporte un premier point d'extremum local A1 de la première courbe convexe 13 qui est un maximum local et un second point d'extremum local B1 de la seconde courbe concave 15 qui est un minimum local alors que le demi-profil d'intrados 12 comporte un premier point d'extremum local A2 de la première courbe convexe 14 qui est un minimum local et un second point d'extremum local B2 de la seconde courbe concave 16 qui est un maximum local.

La présence de la seconde courbe concave 15 sur le demi-profil d'extrados 11 du profil aérodynamique 10 selon la première variante représentée sur les figures 4 à 6 permet, sous des angles d'incidence de décrochage local de provoquer un décollement de l'écoulement d'air balayant le profil aérodynamique 10 sur la seconde courbe concave 15, et en particulier à partir du point d'inflexion I alors que cet écoulement d'air balaye la première courbe convexe 13 en restant tangent au profil aérodynamique 10. Ce décollement de l'écoulement d'air sur la seconde courbe concave 15 entraîne un décrochage aérodynamique local de l'écoulement d'air qui s'accompagne d'une baisse de la force aérodynamique généré par ce profil aérodynamique 10 sans provoquer une baisse brutale de cette force aérodynamique.

Une variation de l'angle d'incidence de l'écoulement d'air balayant le profil aérodynamique 10 provoque une modification de l'intensité de ce décrochage aérodynamique local, voire sa disparition et, en conséquence, des variations significatives de l'intensité de la force aérodynamique générée par ce profil aérodynamique 10. La présence de la seconde courbe concave 15 sur le demi-profil d'extrados 11 du profil aérodynamique 10 et, par suite, du décrochage aérodynamique local sur la seconde courbe concave 15, contribue à une efficacité stabilisatrice importante du profil aérodynamique 10, en relation avec le gradient de portance *Cza* correspondant à la variation de la force aérodynamique générée par un profil aérodynamique en fonction de l'angle d'incidence. Ce décrochage aérodynamique local est avantageusement progressif lors de la variation de l'angle d'incidence du profil aérodynamique 10 et peut de fait être contrôlé avec l'évolution de cet angle d'incidence.

Les formes du demi-profil d'extrados 11 et du demi-profil d'intrados 12 du profil aérodynamique 10 selon la première variante représentée sur les figures 4 à 6 génèrent, sous un écoulement d'air balayant le profil aérodynamique 10 de son bord d'attaque 5 vers son bord de fuite 6, l'apparition d'une force aérodynamique orientée principalement selon la direction négative des ordonnées du repère (U,V) et dénommée « déportance ».

Les figures 4 à 6 représentent trois exemples de profils aérodynamiques 10 avec des caractéristiques différentes, au niveau par exemple de leurs épaisseurs relatives *t/c* significatives, de culots de bords de fuite de hauteurs différentes et des positions des extrema des premières courbes convexes 13 et des secondes courbes concaves 15. L'épaisseur relative *t/c* du profil aérodynamique 10 selon l'invention peut être comprise entre 0.15 et 0.35 et la hauteur *h* du culot du bord de fuite 6 est comprise entre 0.05.*c* et 0.20.*c*. Par rapport à une corde unitaire, le premier extremum local A de la première courbe convexe 13 a une abscisse comprise entre 0.2 et 0.7 et le second extremum local B de la seconde courbe concave a une abscisse comprise entre 0.4 et 0.9, alors que son ordonnée est comprise entre -0.1 et 0.1. De plus, la première pente du demi-profil d'extrados 11 est comprise entre - 10° et -40° au niveau du point d'inflexion I et une seconde pente de ce demi-profil d'extrados 11, au niveau d'une jonction entre la seconde courbe concave 15 et le bord de fuite 6, est comprise entre +10° et +50°.

La présence de la seconde courbe concave 16 sur le demi-profil d'intrados 12 du profil aérodynamique 10 selon la deuxième variante représentée sur les figures 7 à 9 permet un comportement similaire aux profils aérodynamiques 10 selon la première variante avec l'apparition d'un décrochage local sur la seconde courbe concave 16, et, par suite, une efficacité stabilisatrice importante du profil aérodynamique 10.

Les formes des demi-profils d'extrados 11 et d'intrados 12 du profil aérodynamique 10 selon la deuxième variante représentée sur les figures 7 à 9 génèrent, sous un écoulement balayant le profil aérodynamique de son bord d'attaque 5 vers son bord de fuite 6, l'apparition d'une force aérodynamique orientée principalement selon la direction positive des ordonnées du repère (U,V) et dénommée « portance ». Les plages de variations des caractéristiques du profil aérodynamique 10 selon la deuxième variante sont identiques aux plages de variations des caractéristiques du profil aérodynamique 10 selon la première variante.

La figure 10 représente un profil aérodynamique 10 selon la troisième variante et dont le demi-profil d'extrados 11 et le demi-profil d'intrados 12 comportent simultanément une première courbe convexe 13,14 et une seconde courbe concave 15,16.

Les profils aérodynamiques 10 selon ces trois variantes permettent de former une surface stabilisatrice 1 destinée à un giravion 20 et avec une efficacité stabilisatrice améliorée grâce à la présence d'une première courbe convexe 13,14 et d'une seconde courbe concave 15,16 sur au moins un des deux demi-profils 11,12 et du décrochage aérodynamique progressif et contrôlé de chaque seconde courbe concave 15,16.

Cette surface stabilisatrice 1 peut être un empennage 27 sensiblement horizontal ou bien une dérive 28. Cette surface stabilisatrice 1 provoque alors, pour des dimensions identiques, des effets plus importants sur la stabilisation du giravion 20 qu'une surface stabilisatrice formée par des profils aérodynamiques conventionnels 30.

Cette surface stabilisatrice 1 peut également voir ses dimensions réduites afin de fournir les mêmes effets sur la stabilisation sur le giravion 20 qu'une surface stabilisatrice formée par des profils aérodynamiques conventionnels 30 tout en réduisant sa masse ainsi que la bosse d'assiette du giravion 20 lors des vols stationnaires et à basses vitesse d'avancement.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention qui est définie par les revendications suivantes.

## Revendications

1. Profil aérodynamique (10) destiné à une surface stabilisatrice (1) d'un giravion (20), chaque profil aérodynamique (10) s'étendant d'un bord d'attaque (5) vers un bord de fuite (6) et étant défini par deux demi-profils (11, 12) incluant un demi-profil d'extrados (11) et un demi-profil d'intrados (12), ledit profil aérodynamique (10) étant défini par une corde $c$ entre ledit bord d'attaque (5) et ledit bord de fuite (6), par une épaisseur maximale $t$ entre ledit demi-profil d'extrados (11) et ledit demi-profil d'intrados (12), et par une épaisseur relative $t/c$ égale au rapport de ladite épaisseur maximale $t$ par ladite corde $c$,

- ladite épaisseur relative $t/c$ dudit profil aérodynamique (10) étant supérieure ou égale à 0.15,
- ledit bord de fuite (6) étant tronqué de sorte qu'une hauteur $h$ dudit bord de fuite (6) est supérieure ou égale à 0.05.c et **caractérisé en ce que**
- ledit demi-profil d'extrados (11) comporte une première courbe convexe (13) et une seconde courbe concave (15).

2. Profil aérodynamique (10) selon la revendication 1, **caractérisé en ce que**, dans un repère (U,V) attaché audit profil aérodynamique (10) et défini par les directions de ladite corde c et de ladite épaisseur maximale t, une unité de l'axe des abscisses (U) et de l'axe des ordonnées (V) étant égale à ladite corde c, ledit bord de fuite (6) ayant pour coordonnées (1,0) et ledit bord d'attaque (5) ayant une abscisse égale à 1 dans ledit repère (U,V), un premier extremum local (A) de ladite première courbe convexe (13,14) a une abscisse comprise entre 0.2 et 0.7 et un second extremum local (B) de ladite seconde courbe concave (15,16) a une abscisse comprise entre 0.4 et 0.9, ladite abscisse dudit premier extremum local (A) étant strictement inférieure à ladite abscisse dudit second extremum local (B).

3. Profil aérodynamique (10) selon la revendication 2, **caractérisé en ce qu'**une ordonnée dudit second extremum local (B) de ladite seconde courbe concave (15,16) est comprise entre -0.1 et 0.1.

4. Profil aérodynamique (10) selon l'une quelconque des revendications 1 à 3, **caractérisé en ce qu'**une pente dudit demi-profil d'extrados (11) comportant une première courbe convexe (13) et une seconde courbe concave (15) est comprise entre +10 degrés (+10°) et +50 degrés (+50°) au niveau d'une jonction entre ladite seconde courbe concave (15) et ledit bord de fuite (6).

5. Profil aérodynamique (10) selon l'une quelconque des revendications 1 à 4, **caractérisé en ce qu'**une pente dudit demi-profil d'extrados (11) comportant une première courbe convexe (13) et une seconde courbe concave (15) est comprise entre -10 degrés (-10°) et -40 degrés (-40°) au niveau d'un point d'inflexion (I) entre ladite première courbe convexe (13) et ladite seconde courbe concave (15).

6. Profil aérodynamique (10) selon l'une quelconque des revendications 1 à 5, **caractérisé en ce que** ladite hauteur $h$ dudit bord de fuite (6) est comprise entre 0.05.c et 0.20.c.

7. Profil aérodynamique (10) selon la revendication 6, **caractérisé en ce que** ladite hauteur *h* dudit bord de fuite (6) est comprise entre 0.05.*c* et 0.10.*c*.

8. Profil aérodynamique (10) selon l'une quelconque des revendications 1 à 7, **caractérisé en ce que** ladite épaisseur relative *t/c* dudit profil aérodynamique (10) est comprise entre 0.15 et 0.35.

9. Profil aérodynamique (10) selon la revendication 8, **caractérisé en ce que** ladite épaisseur relative *t/c* dudit profil aérodynamique (10) est comprise entre 0.20 et 0.25.

10. Profil aérodynamique (10) selon l'une quelconque des revendications 1 à 9, **caractérisé en ce que** ledit demi-profil d'intrados (12) comporte aussi une première courbe convexe (14) une seconde courbe concave (16).

11. Surface stabilisatrice (1) destinée à un giravion (20), ladite surface stabilisatrice (1) s'étendant selon une première direction (X) en envergure d'une première extrémité (3) à une seconde extrémité (4) et selon une seconde direction (Y) d'un bord d'attaque (5) vers un bord de fuite (6), ladite surface stabilisatrice (1) comportant des sections transversales successives, **caractérisée en ce qu'**au moins une section transversale est définie par un profil aérodynamique (10) selon l'une quelconque des revendications 1 à 10.

12. Surface stabilisatrice (1) selon la revendication 11, **caractérisée en ce que** chaque section transversale est définie par le même profil aérodynamique (10).

13. Surface stabilisatrice (1) selon l'une quelconque des revendications 11 à 12, **caractérisée en ce que** ladite surface stabilisatrice (1) est une surface stabilisatrice en tangage (27).

14. Surface stabilisatrice (1) selon l'une quelconque des revendications 11 à 13, **caractérisée en ce que** ladite surface stabilisatrice (1) est une surface stabilisatrice en lacet (28).

15. Giravion (20) comportant un fuselage (21), une poutre de queue (25), au moins un rotor principal (22) et une installation motrice, **caractérisé en ce que** ledit giravion (20) comporte au moins une surface stabilisatrice (1,27,28) selon l'une quelconque des revendications 11 à 14.

**Patentansprüche**

1. Aerodynamisches Profil (10) für eine Stabilisierungsfläche (1) eines Drehflügelflugzeugs (20), wobei sich jedes aerodynamische Profil (10) von einer Vorderkante (5) zu einer Hinterkante (6) erstreckt und durch zwei Halbprofile (11, 12) definiert ist, die ein Oberseiten-Halbprofil (11) und ein Unterseiten-Halbprofil (12) umfassen, wobei das aerodynamische Profil (10) durch eine Sehne c zwischen der Vorderkante (5) und der Hinterkante (6), durch eine maximale Dicke t zwischen dem Oberseiten-Halbprofil (11) und dem Unterseiten-Halbprofil (12) und durch eine relative Dicke t/c definiert ist, die gleich dem Verhältnis der maximalen Dicke t zu der Sehne c ist,

- wobei die relative Dicke t/c des Profils (10) gleich 0,15 oder größer ist,
- wobei die Hinterkante (6) so abgeschnitten ist, dass eine Höhe h der Hinterkante (6) 0,05.c oder mehr beträgt, und **dadurch gekennzeichnet, dass**
- das Oberseiten-Halbprofil (11) eine erste konvexe Kurve (13) und eine zweite konkave Kurve (15) aufweist.

2. Aerodynamisches Profil (10) nach Anspruch 1, **dadurch gekennzeichnet, dass** in einem an dem aerodynamischen Profil (10) festen Koordinatensystem (U, V), das durch die Richtungen der Sehne c und der maximalen Dicke t definiert ist und bei dem eine Einheit der Abszissenachse (U) und der Ordinatenachse (V) gleich der Sehne c ist, die Hinterkante (6) Koordinaten (1,0) hat und die Vorderkante (5) in dem Koordinatensystem (U, V) eine Abszisse gleich 1 hat, ein erstes lokales Extremum (A) der ersten konvexen Kurve (13,14) eine Abszisse zwischen 0,2 und 0,7 hat und ein zweites lokales Extremum (B) der zweiten konkaven Kurve (15, 16) eine Abszisse zwischen 0,4 und 0,9 hat, wobei die Abszisse des ersten lokalen Extremums (A) strikt kleiner als die Abszisse des zweiten lokalen Extremums (B) ist.

3. Aerodynamisches Profil (10) nach Anspruch 2, **dadurch gekennzeichnet, dass** eine Ordinate des zweiten lokalen Extremums (B) der zweiten konkaven Kurve (15, 16) zwischen -0,1 und 0,1 liegt.

4. Aerodynamisches Profil (10) nach einem der Ansprüche 1 bis 3, **dadurch gekennzeichnet, dass** eine Neigung des eine erste konvexe Kurve (13) und eine zweite konkave Kurve (15) aufweisenden Oberseiten-Halbprofils (11) an einer Verbindungsstelle zwischen der zweiten konkaven Kurve (15) und der Hinterkante (6) zwischen + 10 Grad (+ 10°) und +50 Grad (+50°) beträgt.

5. Aerodynamisches Profil (10) nach einem der Ansprüche 1 bis 3,
**dadurch gekennzeichnet, dass** eine Neigung des eine erste konvexe Kurve (13) und eine zweite konkave Kurve (15) aufweisenden Oberseiten-Halbprofils (11) an einem Wendepunkt (I) zwischen der ersten konvexen Kurve (13) und der zweiten konkaven Kurve (15) zwischen -10 Grad (-10°) und -40 Grad (-40°) beträgt.

6. Aerodynamisches Profil (10) nach einem der Ansprüche 1 bis 5,
**dadurch gekennzeichnet, dass** die Höhe h der Hinterkante (6) zwischen 0,05.c und 0,20.c beträgt.

7. Aerodynamisches Profil (10) nach Anspruch 6,
**dadurch gekennzeichnet, dass** die Höhe h der Hinterkante (6) zwischen 0,05.c und 0,10.c beträgt.

8. Aerodynamisches Profil (10) nach einem der Ansprüche 1 bis 7,
**dadurch gekennzeichnet, dass** die relative Dicke t/c des Profils (10) zwischen 0,15 und 0,35 beträgt.

9. Aerodynamisches Profil (10) nach Anspruch 8,
**dadurch gekennzeichnet, dass** die relative Dicke t/c des Profils (10) zwischen 0,20 und 0,25 beträgt.

10. Aerodynamisches Profil (10) nach einem der Ansprüche 1 bis 9,
**dadurch gekennzeichnet, dass** auch das Unterseiten-Halbprofil (12) eine erste konvexe Kurve (14) und eine zweite konkave Kurve (16) aufweist.

11. Stabilisierungsfläche (1) für ein Drehflügelflugzeug (20),

bei dem sich die Stabilisierungsfläche (1) in einer ersten Richtung (X) der Spannweite von einem ersten Ende (3) zu einem zweiten Ende (4) und in einer zweiten Richtung (Y) von einer Vorderkante (5) zu einer Hinterkante (6) erstreckt, wobei die Stabilisierungsfläche (1) aufeinanderfolgende Querschnitte aufweist,
**dadurch gekennzeichnet, dass** mindestens ein Querschnitt durch ein aerodynamisches Profil (10) nach einem der Ansprüche 1 bis 10 definiert ist.

12. Stabilisierungsfläche (1) nach Anspruch 11,
**dadurch gekennzeichnet, dass** jeder Querschnitt durch dasselbe aerodynamische Profil definiert ist (10).

13. Stabilisierungsfläche (1) nach einem der Ansprüche 11 bis 12,
**dadurch gekennzeichnet, dass** die Stabilisierungsfläche (1) eine Nickstabilisierungsfläche (27) ist.

14. Stabilisierungsfläche (1) nach einem der Ansprüche 11 bis 12,
**dadurch gekennzeichnet, dass** die Stabilisierungsfläche (1) eine Gierstabilisierungsfläche (28) ist.

15. Drehflügelflugzeug (20) mit einem Rumpf (21), einem Heckausleger (25), mindestens einem Hauptrotor (22) und einem Triebwerk,
**dadurch gekennzeichnet, dass** das Drehflügelflugzeug (20) mindestens eine Stabilisierungsfläche (1, 27, 28) nach einem der Ansprüche 11 bis 14 aufweist.

## Claims

1. Aerodynamic profile (10) intended for a stabilising surface (1) of a rotorcraft (20), each aerodynamic profile (10) extending from a leading edge (5) to a trailing edge (6) and being defined by two half-profiles (11, 12), including an upper half-profile (11) and a lower half-profile (12), the said aerodynamic profile (10) being defined by a chord c between the said leading edge (5) and the said trailing edge (6), by a maximum thickness $t$ between the said upper half-profile (11) and the said lower half-profile (12), and by a relative thickness $t/c$ equal to the ratio of the said maximum thickness $t$ to the said chord $c$,

   - the said relative thickness $t/c$ of the said aerodynamic profile (10) being greater than or equal to 0.15,
   - the said trailing edge (6) being truncated in such a way that a height $h$ of the said trailing edge (6) is greater than or equal to $0.05 \times c$,

   **characterised in that**

   - the said upper half-profile (11) comprises a convex first curve (13) and a concave second curve (15).

2. Aerodynamic profile (10) according to claim 1,
**characterised in that**, in a reference frame (U, V) associated with the said aerodynamic profile (10) and defined by the directions of the said chord $c$ and of the said maximum thickness $t$, a unit of the abscissa axis (U) and of the ordinate axis (V) being equal to the said chord $c$, the said trailing edge (6) having coordinates (1, 0) and the said leading edge (5) having an abscissa equal to 1 in the said reference frame (U, V), a first local extremum (A) of the said convex first curve (13, 14) has an abscissa of between 0.2 and 0.7 and a second local extremum (B) of the said concave second curve (15, 16) has an abscissa of between 0.4 and 0.9, the said abscissa of the said first local extremum (A) being strictly less than the said abscissa of the said second local extremum (B).

3. Aerodynamic profile (10) according to claim 2, **characterised in that** an ordinate of the said second local extremum (B) of the said concave second curve (15, 16) is between -0.1 and 0.1.

4. Aerodynamic profile (10) according to any one of claims 1 to 3, **characterised in that** a slope of the said upper half-profile (11) comprising a convex first curve (13) and a concave second curve (15) is between +10 degrees (+10°) and +50 degrees (+50°) at a junction between the said concave second curve (15) and the said trailing edge (6).

5. Aerodynamic profile (10) according to any one of claims 1 to 4, **characterised in that** a slope of the said upper half-profile (11) comprising a convex first curve (13) and a concave second curve (15) is between -10 degrees (-10°) and -40 degrees (-40°) at a point of inflection (I) between the said convex first curve (13) and the said concave second curve (15) .

6. Aerodynamic profile (10) according to any one of claims 1 to 5, **characterised in that** the said height *h* of the said trailing edge (6) is between $0.05 \times c$ and $0.20 \times c$.

7. Aerodynamic profile (10) according to claim 6, **characterised in that** the said height *h* of the said trailing edge (6) is between $0.05 \times c$ and $0.10 \times c$.

8. Aerodynamic profile (10) according to any one of claims 1 to 7, **characterised in that** the said relative thickness *t/c* of the said aerodynamic profile (10) is between 0.15 and 0.35.

9. Aerodynamic profile (10) according to claim 8, **characterised in that** the said relative thickness *t/c* of the said aerodynamic profile (10) is between 0.20 and 0.25.

10. Aerodynamic profile (10) according to any one of claims 1 to 9, **characterised in that** the said lower half-profile (12) also comprises a convex first curve (14) and a concave second curve (16).

11. Stabilising surface (1) intended for a rotorcraft (20), the said stabilising surface (1) extending along a transverse first direction (X) from a first end (3) to a second end (4) and along a second direction (Y) from a leading edge (5) to a trailing edge (6), the said stabilising surface (1) comprising successive cross sections, **characterised in that** at least one cross section is defined by an aerodynamic profile (10) according to any one of claims 1 to 10.

12. Stabilising surface (1) according to claim 11, **characterised in that** each cross section is defined by the same aerodynamic profile (10).

13. Stabilising surface (1) according to any one of claims 11 and 12, **characterised in that** the said stabilising surface (1) is a pitch stabilising surface (27).

14. Stabilising surface (1) according to any one of claims 11 to 13, **characterised in that** the said stabilising surface (1) is a yaw stabilising surface (28).

15. Rotorcraft (20) comprising a fuselage (21), a tail boom (25), at least one main rotor (22) and an engine unit, **characterised in that** the said rotorcraft (20) comprises at least one stabilising surface (1, 27, 28) according to any one of claims 11 to 14.

22

23

1,28

24

27,1

21

24

25

1,28

Fig.1

20

1

3

11,10

11,10

5

11,10

t

12,10

12,10

12,10

6

X

h

c

Y

4

Fig.2

V

30

31

36

$E_1$

35

32

U

$E_2$

Fig.3

Fig.4

Fig.5

Fig.6

Fig.7

Fig.8

Fig.9

Fig.10

**EP 3 581 484 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 1247140
- EP 3401211 A
- EP 1112928 A